# EUROPÄISCHE PATENTSCHRIFT

(11) **EP 3 908 870 B1**
(45) Veröffentlichungstag und Bekanntmachung des Hinweises auf die Patenterteilung: **15.04.2026**
(21) Anmeldenummer: 20702568.5
(22) Anmeldetag: 07.01.2020
(51) Int. Cl.: G02B 6/42, G01M 11/04

(54) **OPTISCHES SYSTEM SOWIE VERFAHREN ZUR HERSTELLUNG EINES OPTISCHEN SYSTEMS**
OPTICAL SYSTEM AND METHOD FOR PRODUCING AN OPTICAL SYSTEM
SYSTEME OPTIQUE ET PROCEDE DE PRODUCTION D'UN SYSTEME OPTIQUE

(30) Priorität: 07.01.2019 DE 102019100226
(43) Veröffentlichungstag der Anmeldung: 17.11.2021
(73) Patentinhaber: Leibniz-Institut für Atmosphärenphysik E.V. an der Universität Rostock, 18225 Kühlungsborn (DE)
(72) Erfinder: HÖFFNER, Josef, 18225 Kühlungsborn Mecklenburg-Vorpommern (DE); EIXMANN, Ronald, 18209 Wittenbeck Mecklenburg-Vorpommern (DE); MAUER, Alsu, 18209 Bad Doberan Mecklenburg-Vorpommern (DE); FROH, Jan, 18069 Rostock Mecklenburg-Vorpommern (DE)
(74) Vertreter: Heinemeyer, Karsten
(86) Internationale Anmeldenummer: PCT/EP2020/050217
(87) Internationale Veröffentlichungsnummer: WO 2020/144186

(56) Entgegenhaltungen:
- CN-A- 104 002 286
- GB-A- 2 453 719
- US-A1- 2003 082 986
- US-A1- 2015 174 705
- IMLAU RESEARCH GROUP: "MyPhotonics", INTERNET CITATION, 11 October 2018 (2018-10-11), pages 1 - 11, XP009538123, Retrieved from the Internet <URL:https://web.archive.org/web/20190103091436/http://www.myphotonics.eu/> [retrieved on 20220809]
- DAVIS ERIC J. ET AL: "Using Open-Source, 3D Printable Optical Hardware To Enhance Student Learning in the Instrumental Analysis Laboratory", JOURNAL OF CHEMICAL EDUCATION, vol. 95, no. 4, 9 February 2018 (2018-02-09), US, pages 672 - 677, XP055938083, ISSN: 0021-9584, DOI: 10.1021/acs.jchemed.7b00480
- KATHRINR7: "Wir haben also ganz viele Lego-Grundplatten gekauft, die wir gerne nebeneinander auf eine Platte kleben m�chten. Welches Material nehmen wir da am besten?", 1 January 2016 (2016-01-01), pages 1 - 2, XP093332182, Retrieved from the Internet <URL:https://www.gutefrage.net/frage/wir-haben-also-ganz-viele-lego-grundplatten-gekauft-die-wir-gerne-nebeneinander-auf-eine-platte-kleben-moechten-welches-material-nehmen-wir-da-am-besten> [retrieved on 20251104]

## Beschreibung

Die Erfindung betrifft ein optisches System sowie ein Verfahren zur Herstellung eines optischen Systems. Das beschriebene optische System verfügt über eine Basisplatte, die in einem Raster angeordnete Befestigungspunkte aufweist, und über wenigstens einen Halter zur Aufnahme eines Optikelements, das an zumindest einem der Befestigungspunkte fixierbar ist.

Für den Aufbau von veränderbaren und spezifisch anpassbaren optischen Systemen, deren optische Komponenten unter Berücksichtigung der durchzuführenden Messung konfiguriert werden, kommen üblicherweise sogenannte optische Tische zum Einsatz, die über eine Vielzahl von rasterförmig angeordneten Befestigungspunkten verfügen. Die Befestigungspunkte, an denen nach Bedarf Halter mit Optikelementen befestigt werden, sind in Form von Bohrungen mit Innengewinde ausgeführt, in die die Halter eingeschraubt werden können. In Europa verfügen derartige optische Tische üblicherweise über in einem 25mm-Raster angeordnete Bohrungen mit einem M6-Innengewinde. Mithilfe entsprechend konfigurierter optischer Systeme werden zur Durchführung optischer Versuche oftmals sehr präzise und empfindliche optische Messaufbauten bereitgestellt.

In diesem Zusammenhang ist aus der DE 10 2014 015 665 B4 ein optischer Tisch bekannt, der eine mit rasterförmig angeordneten Bohrungen versehene Tischplatte aufweist. Die Bohrungen weisen wiederum Gewinde zur Befestigung von Haltern für optische Elemente auf. Für die Durchführung spezieller optischer Versuche ist die Tischplatte mit einem Kühlelement gekoppelt, das mithilfe einer Kältemaschine auf die benötigte Temperatur gebracht werden kann. Um zu verhindern, dass Schwingungen aus der Umgebung, insbesondere von der Kältemaschine, auf die Tischplatte übertragen werden und so die Messungen behindern, verfügen die Tischbeine über Dämpfungseinrichtungen zur Dämpfung von Vibrationen.

Ein weiterer optischer Tisch ist aus der EP 1 413 871 B1 bekannt. Das wesentliche technische Merkmal des in dieser Schrift beschriebenen optischen Tisches besteht darin, dass die Tischplatte, die üblicherweise relativ groß, insbesondere dick, ausgeführt ist, aus mehreren Komponenten zusammengebaut wird. Hierzu ist vorgesehen, einen optischen Tisch als Basiselement für ein optisches System herzustellen, der unterhalb der eigentlichen Tischoberfläche, auf der sich wiederum Befestigungspunkte für die Halter zur Aufnahme einzelner optischer Elemente befinden, eine separate Unterkonstruktion aufweist. Gemäß einer besonderen beschriebenen Ausführungsform verfügt die Unterkonstruktion über wenigstens zwei flächig ausgeführte Elemente, die auf geeignete Weise zusammengefügt werden.

Aus einer Internetveröffentlichung (https://web.archive.org/web/20190103091436/ http://www.myphotonics.eu/) ist die Konstruktion optomechanischer Komponenten mit Standardspielbausteinsystemen, wie. z.B. LEGO^{®} bekannt. Es werden hierfür Basisplatten mit Noppenraster als Träger verwendet, auf die Halter für optische Elemente aufgesteckt werden. Zur Stabilisierung wird empfohlen, eine bzw. zwei Basisplatten auf eine Holz- oder Aluminiumplatte zu kleben. In einer Abbildung wird das Aufkleben der Basisplatte auf einen optischen Tisch gezeigt.

In einer weiteren Internetveröffentlichung (https://www.gutefrage.net/frage/wir-haben-also-ganzviele-lego-grundplatten-gekauft-die-wir-gerne-nebeneinander-auf-eine-platte-kleben-moechtenwelches-material-nehmen-wir-da-am-besten) werden vorteilhafte Befestigungsmöglichkeiten von LEGO^{®} Basisplatten auf Grundplatten diskutiert, wobei neben Kleben, die Verwendung von Bohrungen mit Senkkopfschrauben vorgeschlagen wird.

Ausgehend von den bekannten technischen Lösungen zur Bereitstellung eines optischen Systems, mit dem bedarfsgerecht optische Messungen durchgeführt werden können, liegt der Erfindung die Aufgabe zu Grunde, die Gestaltung und Ausführung eines optischen Systems im Vergleich zu den aus dem Stand der Technik bekannten Lösungen zu vereinfachen. Vor allem soll der Aufbau eines optischen Systems vergleichsweise einfach und schnell möglich sein, ohne dass hierdurch Präzisionseinschränkungen in Kauf genommen werden müssen. Ferner sollten auch die für eine Veränderung eines optischen Systems, insbesondere der Austausch oder Einbau optischer Komponenten, erforderlichen Schritte insbesondere in Bezug auf die Justierung der optischen Komponenten vereinfacht werden, sodass generell auch ein zügiger Umbau eines optischen Systems möglich ist. Insgesamt sollte der Aufwand für die Justierung der einzelnen optischen Elemente des optischen Systems minimiert und im Vergleich zu den aus dem Stand der Technik bekannten Lösungen eine kostengünstige Alternative für den Aufbau eines optischen Systems geboten werden.

Im Weiteren sollte die anzugebende technische Lösung flexible Aufbauten optischer Systeme auf der Basis normierte Abmessungen erlauben. Dies setzt voraus, dass ein entsprechend ausgeführtes optisches System sowohl auf bekannten optischen Tischen, insbesondere mit Standardrastermaß, aufgebaut werden kann, also auch ohne Einsatz eines derartigen optischen Tisches, als Stand-Alone-Lösung, realisierbar ist.

Die zuvor beschriebene Aufgabe wird mit einem optischen System gemäß Anspruch 1 sowie einem Verfahren zur Herstellung eines optischen Systems nach Anspruch 12 gelöst. Vorteilhafte Ausführungsformen der Erfindung sind Gegenstand der abhängigen Ansprüche und werden in der folgenden Beschreibung unter teilweiser Bezugnahme auf die Figuren näher erläutert.

Die Erfindung betrifft ein optisches System mit einer Basisplatte, die in einem Raster angeordnete Befestigungspunkte aufweist, und mit wenigstens einem Halter zur Aufnahme eines Optikelementes, der an zumindest einem der Befestigungspunkte fixierbar ist. Erfindungsgemäß ist dieses optische System derart weitergebildet worden, dass die Befestigungspunkte in Form von Noppenelementen ausgeführt sind und der Halter ein Befestigungselement aufweist, das zur Fixierung des Halters auf der Basisplatte auf zumindest eines der Noppenelemente aufsteckbar ist. Wesentlich an der erfindungsgemäßen technischen Lösung ist somit eine Basisplatte bzw. ein Basiselement, auf dem Noppenelemente oder auch Pins, also höckerartige Erhebungen auf der Oberfläche der Basisplatte, vorgesehen sind. Unter höckerartigen Erhebungen auf der Oberfläche der Basisplatte werden in diesem Zusammenhang Erhebungen verstanden, die zumindest zum überwiegenden Teil gleichförmig ausgebildet und in jedem Fall rasterförmig auf der Oberfläche der Basisplatte angeordnet sind. Aus technischer Sicht können derartige Erhebungen auch als einseitig mit der Oberfläche der Basisplatte verbundene Passstifte verstanden werden, die sich vor allem durch Ihre gleichförmige Ausgestaltung und präzise Anordnung auf der Basisplatte auszeichnen.

Generell ist es denkbar, dass die Noppenelemente über eine zylinderförmige, quaderförmige oder gekrümmte Außenkontur verfügen, wobei die geometrische Ausgestaltung der Noppenelemente nicht auf eine bestimmte Form beschränkt ist. Von besonderem Vorteil ist es, wenn die rasterförmig auf der Oberfläche der Basisplatte angeordneten Nockenelemente oder Pins als Hohlzylinder ausgeführt sind.

Im Weiteren zeichnet sich die Erfindung dadurch aus, dass der wenigstens eine Halter über ein Befestigungselement verfügt, das auf zumindest eines der Noppenelemente, bevorzugt auf eine Mehrzahl von Noppenelemente, aufgesteckt wird. Von besonderem Vorteil ist es, wenn das Befestigungselement wenigstens eine Ausnehmung, beispielsweise in Form einer Bohrung, aufweist, die nach erfolgtem Aufstecken ein Noppenelement aufnimmt. Bevorzugt erfolgt das Aufstecken derart, dass es an einer Außenfläche des Noppenelementes zu einer Reibung und/oder einem Klemmen, kommt, sodass das Befestigungselement mit dem Halter sicher fixiert ist. Das Befestigungselement des Halters ist vorzugsweise somit derart ausgeführt, dass beim Aufstecken des Befestigungselementes auf wenigstens ein Noppenelement zumindest eine leichte Presspassung zwischen dem Noppenelement und dem Befestigungselement des Halters entstehet.

Ferner ist gemäß einer speziellen Ausführungsform der Erfindung vorgesehen, dass das Befestigungselement des Halters eine runde, quadratische oder rechteckige Ausnehmung aufweist, die auf zumindest eines der auf der Oberfläche der Basisplatte befindlichen Noppenelemente aufgesteckt wird. Der große Vorteil eines derartigen Aufbaus ist, dass entsprechende Halter schnell, flexibel und bedarfsgerecht auf der Oberfläche der Basisplatte angeordnet werden können und gleichfalls eine hohe Präzision in Bezug auf die Anordnung und Ausrichtung des Halters erzielt wird. Im Weiteren kann ein Umbau eines optischen Systems sehr schnell realisiert werden, indem zumindest einzelne Halter von ihren Steckplätzen auf der Oberfläche der Basisplatte abgenommen und diese oder andere Halter an einem anderen erforderlichen Steckplatz angeordnet werden.

Aufgrund der erfindungsgemäß vorgesehenen Anordnung von Noppenelementen oder Pins in einem festen Raster wird eine hochpräzise Positionierung der einzelnen Halter auf der Basisplatte sichergestellt. Hierbei dienen die Noppenelemente oder Pins, die in einem festen Raster angeordnet sind, zum Aufstecken wenigstens eines Halters, der geeignete Optikelemente aufnimmt.

Gemäß einer besonderen Ausführungsform der Erfindung ist vorgesehen, dass am Befestigungselement zumindest ein zusätzliches Fixierungsmittel vorgesehen ist, das während der Fixierung des Halters auf der Basisplatte mit dem wenigstens einen Noppenelement, auf das das Befestigungselement aufgesteckt ist, verbunden ist. Auf vorteilhafte Weise verfügt das zusätzliche Fixierungsmittel über eine Bohrung im Befestigungselement und über eine darin angeordnete Schraube. Mithilfe eines derart ausgeführten zusätzlichen Fixierungsmittels, das insbesondere über eine Schraube verfügt, erfolgt eine endgültige sichere und genaue Befestigung eines Halters auf einem Noppenelement. Durch das zusätzliche Fixierungsmittel wird sichergestellt, dass sich einerseits Halter und die von ihnen aufgenommenen Komponenten nicht von der Basisplatte lösen können und dass andererseits die Halter mit ihrer Unterseite flach auf der Basisplatte aufliegen, selbst wenn die Basisplatte in diesem Bereich kleine Unebenheiten und/oder Verschmutzungen aufweist.

Auf besonders vorteilhafte Weise wird wenigstens ein zusätzliches Fixierungsmittel mit einer Schraube verwendet, deren Außengewinde ein Gewinde schneiden kann, also während des Eindringens ein Gewinde in die Bohrung des Befestigungselementes schneidet oder zumindest den in diesem Bereich der Bohrungswand vorgesehenen Werkstoff elastisch verdrängt. In jedem Fall wird eine sichere Befestigung der Schraube innerhalb der Bohrung gewährleistet, die wiederum, insbesondere durch den Kontakt der Schraubenspitze mit einem Noppenelement oder Pin den Halter sicher in seiner Position fixiert und gleichfalls ein ungewünschtes lösen des Halters zuverlässig verhindert.

Gemäß einer speziellen Weiterbildung des erfindungsgemäßen optischen Systems weist die Basisplatte und/oder der Halter ein druckfähiges Material auf. Vorzugsweise weist die Basisplatte und/oder der Halter in diesem Zusammenhang ein aus einem synthetischen Polymer, insbesondere aus wenigstens einen Polyactid (PLA) hergestellten Kunststoff auf. Die Herstellung einer Basisplatte und/oder eines Halters für das erfindungsgemäß ausgeführte optische System im Wege eines 3D-Druckvorgangs bietet den besonderen Vorteil, dass ein optisches System mit präzisen Abmessungen und darüber hinaus besonders flexibel und somit bedarfsgerecht hergestellt werden kann. Die Nutzung eines 3-D Druckverfahrens ermöglicht es auf besondere Weise, extrem kleine Strukturen herzustellen, sodass die einzelnen, rasterförmig auf der Oberfläche der Basisplatte vorgesehenen Noppenelemente oder Pins vergleichsweise klein ausgeführt werden können. Auf diese Weise können besonders kompakte optische Systeme, also Aufbauten mit optischen Komponenten, mit einzelnen, auch sehr kleinen optischen Komponenten realisiert werden. Von besonderer Bedeutung hierbei ist, dass mithilfe von 3D-Druckverfahren bereits bei Einsatz vergleichsweise kostengünstiger 3-D-Drucker (Fused-Deposition-Modeling- Drucker (FDM-Drucker) eine vergleichsweise hohe Präzision erreicht wird.

In einer weiteren besonderen Ausführungsform weist die Basisplatte wenigstens ein Steckelement auf, über das die Basisplatte an wenigstens einer Seitenkante mit wenigstens einer weiteren Basisplatte, die ebenfalls über rasterförmig angeordnete Befestigungspunkte verfügt, zusammensteckbar ist. Vorzugsweise verfügt eine Basisplatte über Steckelemente, die Stecker als auch Aufnahmen aufweisen, sodass weitere Basisplatten mit entsprechend geeigneter Gegenkontur an der Basisplatte befestigt werden können. Es ist somit denkbar, eine Basisplatte derart auszuführen, dass diese mit wenigstens einer weiteren Basisplatte zusammengesteckt wird, um je nach Bedarf für eine optische Messung die Größe der bereitgestellten Grundfläche anzupassen. Bedarfsgerecht können so kleine oder auch größere Messaufbauten realisiert werden. Durch das Zusammenstecken einzelner Basisplatten mit Noppenelementen, die bevorzugt im gleichen Rastermaß angeordnet sind, wird wiederum eine hochpräzise Grundstruktur mit Noppenelementen bereitgestellt, auf die unterschiedliche Halter mit den daran befestigten Optikelement aufgesteckt werden können.

Erfindungsgemäß ist vorgesehen, dass die Basisplatte, auf einer den Noppenelementen gegenüberliegenden Unterseite, wenigstens ein Verbindungselement aufweist, über das die Basisplatte mit einem optischen Tisch, der über rasterförmig angeordnete Bohrungen mit Innengewinde verfügt, verbindbar ist. Gemäß dieser Ausführungsform ist vorgesehen, dass ein optisches System mit der erfindungsgemäß ausgeführten Basisplatte auf einem herkömmlichen optischen Tisch aufgebaut wird. Hierbei ist an der Basisplatte ein geeignet ausgeführtes Verbindungselement, nämlich eine Bohrung vorgesehen, über das die Basisplatte mit dem optischen Tisch verbindbar ist. Erfindungsgemäß ist das Verbindungselement der Basisplatte als Stufenbohrung mit zwei unterschiedlichen Durchmessern ausgeführt, sodass die Basisplatte mit Hilfe einer Schraube, vorzugsweise einer Innensechskant- oder Innensechsrundschraube, die in die hierfür im optischen Tisch vorgesehenen Bohrungen mit Innengewinde eingeschraubt wird, befestigbar ist. Der Schraubenkopf liegt hierbei mit seiner dem Schraubengewinde zugewandten Seite auf einer Anschlagfläche, die sich am Übergang vom Bohrungsabschnitt mit größerem Durchmesser zu dem Bohrungsabschnitt mit kleinerem Durchmesser befindet, an. Bevorzugt wird die Basisplatte auf einem optischen Tisch befestigt, der aus Stahl oder Aluminium gefertigt ist. Grundsätzlich ist es denkbar, dass eine derartige Verbindung durch eine Steck-, Klemm- oder wie zuvor beschrieben durch eine Schraubverbindung realisiert wird, wobei nur die Schraubverbindung in Verbindung mit der Stufenbohrung in der Basisplatte unter den Schutzumfang der Ansprüche fällt.

In diesem Zusammenhang ist es gemäß einer speziellen Weiterbildung der Erfindung denkbar, dass die Basisplatte mit den rasterförmig angeordneten Noppenelementen derart ausgeführt ist, dass diese mit standardisierten optischen Tischen, die in Europa beispielsweise in einem 25 mm Raster angeordnete Bohrungen mit M6-Innengewinde aufweisen, kombinierbar ist. Alternativ ist es denkbar, dass die Befestigungspunkte bzw. die im Bereich der Befestigungspunkte vorgesehenen Noppenelemente unter Berücksichtigung eines angloamerikanischen Maßsystems, insbesondere der sogenannten imperial units, in einem Raster angeordnet werden. In diesem Fall kann es etwa von Vorteil sein, wenn Mittelpunkte benachbarter Befestigungspunkte einen Abstand von 25,4 mm aufweisen.

Gemäß dieser Ausführungsform ist es möglich, mithilfe geeigneter Verbindungselemente, eine bevorzugt durch 3D-Druck hergestellte Basisplatte mit einem optischen Tisch zu verbinden, insbesondere mit Hilfe einer Schraubverbindung. Weiterhin ist es denkbar, eine oder eine Mehrzahl von Basisplatten auf einem herkömmlichen optischen Tisch zu befestigen, sodass es grundsätzlich möglich ist, eine Art Adapter zwischen dem Raster des optischen Tisches und einem frei wählbaren Raster, das durch die Noppenelemente auf der Oberfläche der Basisplatte gebildet wird, bereitzustellen. Auch können mehrere Basisplatten und/oder Halter mit oder ohne optische Komponenten übereinander angeordnet werden, sodass auch spezielle dreidimensionale optische Aufbauten herstellbar sind. Grundsätzlich können durch das Aufbringen wenigstens einer Basisplatte auf herkömmliche optische Tische mehrschichtige Kombination aus optischem Tisch und wenigstens einer Basisplatte, die auf ihrer Oberfläche über eine Mehrzahl rasterförmig angeordneter Noppenelemente verfügt, hergestellt werden. Verfügen mehrere Basisplatten darüber hinaus über die bereits beschriebenen Steckelemente zum Verbinden wenigstens zweier Basisplatten, können so auf der Oberfläche eines herkömmlichen optischen Tisches flächig miteinander verbundene Basisplatten angeordnet werden. Durch das Zusammenstecken der einzelnen Basisplatten wird ferner sichergestellt, dass an den Übergängen zwischen zwei Basisplatten, die bevorzugt im Wege eines 3D-Druckvorgangs hergestellt sind, keine Verschiebungen im Raster auftreten und auch trotz des Übergangs die hochgenaue Rasteranordnung der Noppenelemente beibehalten bleibt.

Auf vorteilhafte Weise weist die Basisplatte ein vergleichsweise flexibles Material, insbesondere einen durch Polymerisation von PLA erzeugten Kunststoff, auf, sodass eine Basisplatte mit extrem hoher Genauigkeit Bezug auf die Anordnung und Ausführung der einzelnen Noppenelemente bzw. Pins bereitgestellt wird. Eine derartige Basisplatte wird vorzugsweise durch 3D-Drucken, insbesondere im Wege des Filamentdrucks oder Fused-Deposition-Modelings (FDM) hergestellt. Von großem Vorteil hierbei ist, dass die horizontale Auflösung typischer FDM-Drucker etwa 0,005 mm beträgt. Der Nachteil, dass in Abhängigkeit des gewählten Druckers teilweise keine präzisen Oberflächen bereitgestellt werden, sondern diese über eine gewisse Rauigkeit verfügen, kann dadurch ausgeglichen werden, dass das Material für die Basisplatte und/oder den Halter derart gewählt wird, dass die jeweils zu verbindenden oder aneinanderstoßenden Teile in gewissen Grenzen flexibel sind und beim Zusammenfügen in die benötigte Form gedrückt werden. Gemäß einer speziellen Weiterbildung der Erfindung werden eine oder mehrere Basisplatten sowie wenigstens ein Halter eines erfindungsgemäß ausgeführten optischen Systems aus einem Werkstoff gedruckt.

In einer besonderen Ausführungsform Erfindung weist die Basisplatte ein Rastermaß auf, sodass ein Abstand zwischen Mittelpunkten zweier benachbarter Befestigungspunkte kleiner als 25 mm ist. Hierbei wird berücksichtigt, dass aufgrund der erfindungsgemäß vorgesehenen Noppenelemente auf der Oberfläche der Basisplatte, die bevorzugt im Wege eines 3D-Druckverfahrens hergestellt werden, besonders präzise kleine Strukturen herstellbar sind. Auf vorteilhafte Weise ist daher vorgesehen, dass die Basisplatte ein Rastermaß aufweist, sodass 25 mm ein ganzzahliges Vielfaches eines Abstands zwischen den Mittelpunkten zweier benachbarter Befestigungspunkte ist. Auf ganz besonders vorteilhafte Weise wird ein Raster erzeugt, bei dem der Abstand zwischen zwei Befestigungspunkten bzw. deren Mittelpunkten 12,5 mm beträgt. Bei diesem Abstand handelt es sich somit genau um die Hälfte des Abstandes zwischen zwei benachbarten Befestigungspunkten, wie er insbesondere in Europa bei standardmäßig ausgeführten optischen Tischen vorgesehen ist.

Im Weiteren ist es von Vorteil, wenn der Halter eine quader- oder würfelförmige Grundstruktur aufweist, innerhalb der das Befestigungselement und die Aufnahme für das optische Element angeordnet sind. Vorzugsweise wird ein Halter bereitgestellt, der etwa auf einer Seite, insbesondere auf der Unterseite, ein Befestigungselement mit einer Ausnehmung, die im Querschnitt bevorzugt rund, mehreckig, rechteckig oder quadratisch ist, aufweist, wobei wenigstens eine Ausnehmung zur Fixierung des Halters über zumindest ein Noppenelement der Basisplatte gesteckt wird. Gemäß einer besonderen Ausgestaltung der Erfindung ist auf der gegenüberliegenden Seite des Halters zumindest eine Aufnahme zur lösbaren Befestigung eines Optikelementes vorgesehen. Vorzugsweise ist die Aufnahme hierbei derart gestaltet, dass das Optikelement werkzeugfrei in der Aufnahme fixiert und dieser entnommen werden kann, wobei es einen besonderen Vorteil darstellt, wenn das Optikelement einfach in die Aufnahme eingesteckt oder eingeklemmt wird. Die Aufnahme für das Optikelement ist in Bezug auf seine konstruktive Gestaltung und/oder den verwendeten Werkstoff derart ausgeführt, dass es beim Einführen eines Optikelements zu einer elastischen Verformung der Aufnahme kommt, wobei die Aufnahme in die Ausgangsposition überführt wird und/oder seine Ausgangsgestalt annimmt, sobald das Optikelement der Aufnahme wieder entnommen wird. Auf vorteilhafte Weise wird hierbei auf weitere Fixierungselemente im Bereich der Aufnahme für das Optikelement verzichtet. Aufgrund des hochpräzise gestalteten Rasters von Noppenelementen, auf das der Halter aufgesteckt wird, kann auf eine zusätzliche Justierung des Optikelementes verzichtet werden, insbesondere da durch das Raster sowohl die Anordnung als auch die Ausrichtung des Halters besonders präzise vorgegeben wird. Selbstverständlich ist es denkbar, die Halter in Abhängigkeit der Art einer Messung zu gestalten und/oder auszuwählen. So ist es beispielsweise denkbar einen Halter derart weiterzubilden und/oder mit einer geeigneten Mechanik oder Elektromechanik zu versehen, sodass ein sogenannter kinematischer Mount für ein optisches Element zur Verfügung gestellt wird. Dieser kinematische Mount ist mittelbar oder unmittelbar über die erfindungsgemäß in einem Raster angeordneten Noppenelemente mit der Basisplatte verbunden.

In einer weiteren Ausführungsform der Erfindung ist der wenigstens eine Halter lichtdicht ausgeführt, sodass auf das wenigstens eine in der Aufnahme des Halters angeordnete optische Element und/oder auf die innerhalb des Halters angeordnete optische Strecke, entlang der während eines Versuchs ein Lichtstrahl, insbesondere ein Laserlichtstrahl verläuft, kein Umgebungslicht fällt. Vorzugsweise verfügt der Halter zumindest auf einer Seite über eine Öffnung durch die ein optisches Element in den Halter eingebracht und in der Aufnahme fixiert werden kann und die durch einen Deckel lichtdicht verschließbar ist.

Neben einem optischen System betrifft die Erfindung auch ein Verfahren zur Herstellung eines optischen Systems, bei dem eine Basisplatte mit in einem Raster angeordneten Befestigungspunkten bereitgestellt wird, wenigstens ein Halter im Bereich eines Befestigungspunktes fixiert und ein optisches Element in einer Aufnahme des Halters befestigt wird. Erfindungsgemäß ist dieses Verfahren derart weitergebildet worden, dass an den Befestigungspunkten der Basisplatte von einer Plattenoberfläche erhabene Noppenelemente oder Pins ausgebildet werden und der Halter durch Aufstecken eines Befestigungselementes des Halters auf wenigstens ein Noppenelement fixiert wird. Vorzugsweise erfolgt die Fixierung durch Herstellen einer zumindest leichten Klemmverbindung. Es ist somit wesentlich für die Erfindung, dass zunächst eine Basisplatte mit von der Oberfläche aufragenden Erhebungen, sogenannten Noppenelementen oder Pins, die in einem regelmäßigen Raster angeordnet sind, bereitgestellt wird, auf die zumindest ein Halter des optischen Systems aufgesteckt wird. Hierbei erfolgt das Aufstecken des Halters derart, dass das Befestigungselement des Halters mit einem Noppenelement oder mit einer Mehrzahl von Noppenelementen eine Klemmverbindung oder Presspassung eingeht.

Auf vorteilhafte Weise sind, sobald sich der Halter in aufgestecktem Zustand befindet, innerhalb des Befestigungselementes des Halters ein Noppenelement oder eine Mehrzahl von Noppenelementen angeordnet. Sofern in aufgestecktem Zustand des Halters von einem Befestigungselement eine Mehrzahl von Noppenelementen aufgenommen werden, so berühren zumindest die am äußeren Umfang des umschlossenen Rasters befindlichen Noppenelemente das Befestigungselement des Halters.

Gemäß einer besonderen Weiterbildung des erfindungsgemäßen Verfahrens wird die Basisplatte und/oder wenigstens einer der Halter durch 3D-Drucken hergestellt. Auf vorteilhafte Weise bietet sich als 3D-Druckverfahren ein Filament-Druckverfahren, das sogenannte Fused-Deposition-Modeling (FDM) an. Wesentlich hierbei ist, dass bereits mit vergleichsweise einfachen und kostengünstigen Druckern präzise Strukturen erzeugbar sind. Da derartige Drucker vergleichsweise kostengünstig und in größeren Stückzahlen verfügbar sind, ist es etwa denkbar, dass Labore, in denen optische Messungen durchgeführt werden, auf diese Weise bedarfsgerecht, flexibel und kostengünstig Basisplatten und/oder geeignete Halter herstellen.

Eine besondere Weiterbildung der Erfindung sieht im Übrigen vor, dass die Basisplatte und/oder wenigstens einer der Halter durch 3D-Drucken hergestellt wird, wobei bevorzugt wenigstens ein Polyamid als Druckmaterial verwendet wird. Vorzugsweise wird PA 6 (Handelsname Perlon), PA 11 oder PA 12 als Druckmaterial verwendet. Ganz besonders bevorzugt wird PA 6.6 (Handelsname Nylon) verwendet. Bei PA 6.6 handelt es sich um ein Polyhexamethylenadipinsäureamid.

In einer weiteren Ausgestaltung der Erfindung ist vorgesehen, dass nach Aufstecken des Befestigungselementes auf das wenigstens einen Noppenelement zumindest eine Schraube derart in eine im Befestigungselement angeordnete Bohrung eingedreht wird, dass sich hierdurch in der Bohrung zumindest zeitweise ein Innengewinde ausbildet und die Schraube wenigstens mit ihrem in Bewegungsrichtung vorderen Ende das Noppenelement berührt. Mithilfe einer derartigen Verschraubung wird somit eine zusätzliche Fixierung des Halters auf der Basisplatte realisiert. Es kann so sichergestellt werden, dass der Halter genau an der Position verbleibt, in die er ursprünglich gebracht worden ist. Außerdem wird ein späteres Lösen des Halters und/oder die damit verbundene Dejustierung eines optischen Elements zuverlässig vermieden.

Im Weiteren wird die Erfindung ohne Beschränkung des allgemeinen Erfindungsgedankens anhand von Ausführungsbeispielen unter Bezugnahme auf die Figuren näher erläutert. Dabei zeigen:
- Fig. 1:: Perspektivische Darstellung einer Basisplatte eines erfindungsgemäß ausgeführten optischen Systems;
- Fig. 2:: Perspektivische Darstellung eines Halters eines erfindungsgemäß ausgeführten optischen Systems;
- Fig. 3:: Draufsicht auf die Unterseite eines Halters eines erfindungsgemäß ausgeführten optischen Systems;
- Fig. 4:: Perspektivische Ansicht einer speziell ausgeführten Basisplatte eines erfindungsgemäß ausgeführten optischen Systems;
- Fig. 5:: Darstellung einer komplexen Haltestruktur, die eine Mehrzahl optischer Elemente aufnehmen kann und zur Befestigung auf einer Basisplatte eines erfindungsgemäß ausgeführten optischen Systems vorgesehen ist;
- Fig. 6:: Optischer Tisch mit daran befestigter Basisplatte, auf die Halter zur Aufnahme von unterschiedlichen Optikelementen aufgesteckt sind sowie
- Fig. 7:: Integration eines Interferometers in eine 3D-Anordnung eines erfindungsgemäß ausgeführten optischen Systems.

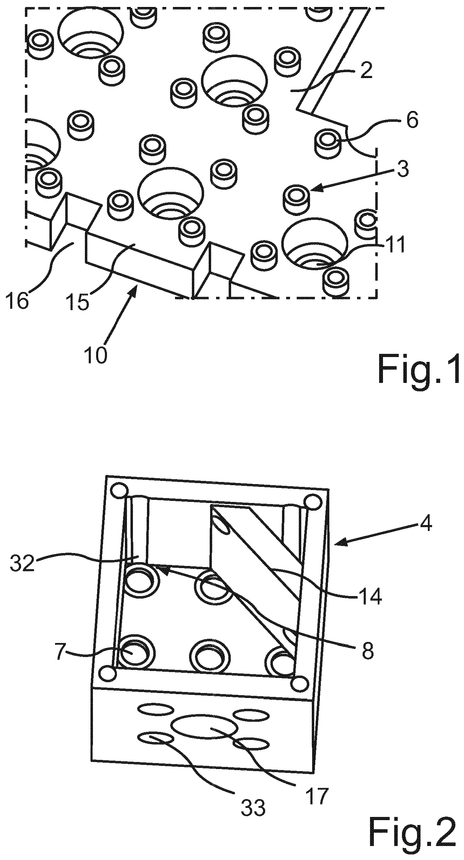

Fig. 1 zeigt in einer perspektivischen Ansicht eine Basisplatte 2, wie sie für ein erfindungsgemäß ausgeführtes optisches System 1 verwendet wird. Die in Fig. 1 gezeigte Basisplatte 2 ist im Wege eines 3D-Druckvorgangs, hier dem Fusion-Deposition-Modeling, aus Polyacetid (PLA) hergestellt worden. Die so hergestellte Basisplatte 2 verfügt somit über einen durch Polymerisation eines synthetischen Polymers, hier einer Polymilchsäure, erzeugten Kunststoff.

Wesentlich für den Einsatz in einem erfindungsgemäßen optischen System ist 1, dass die Basisplatte 2 auf ihrer Oberfläche in einem regelmäßigen und präzisen Raster angeordnete, als Befestigungspunkte 3 dienende Noppenelemente 6 oder Pins aufweist.

Der Abstand zwischen den Mittelpunkten der einzelnen benachbarten Noppenelemente 6 beträgt hier 12,5 mm. Die einzelnen Noppenelemente 6 weisen eine hohlzylinderförmige Kontur auf und stellen Erhebungen auf der Oberfläche der Basisplatte 2 dar. Zur Fixierung eines Halters 4 auf der Basisplatte 2 wird ein Befestigungselement 7 des Halters 4 auf ein Noppenelement 6 oder eine Mehrzahl von Noppenelementen 6 aufgesteckt. Die Fixierung des Halters 4 auf den Noppenelementen 6 der Basisplatte 2 erfolgt hierbei derart, dass der Halter 4 einerseits präzise angeordnet und ausgerichtet ist und andererseits zuverlässig auf den Noppenelementen 6 fixiert, insbesondere festgeklemmt ist.

Im Weiteren verfügt die in der Fig. 1 dargestellte Basisplatte 2 über Verbindungselemente 11, über die die Basisplatte 2 auf einem optischen Tisch 12 befestigt werden kann. Die Verbindungselemente 11 sind als Ausnehmungen, hier als Stufenbohrung mit entlang der Bohrungsachse zwei unterschiedlichen Durchmessern, ausgeführt. Die die Verbindungselemente 11 bildenden Bohrungen sind derart dimensioniert, dass eine M6-Innensechskant- oder M6-Innensechsrundschraube durch die Stufenbohrung hindurchgesteckt und in eine entsprechend in einem optischen Tisch 12 angeordnete Bohrung 13 mit Innengewinde eingeschraubt werden kann, um die Basisplatte 2 auf einem optischen Tisch 12 zu befestigen. Der Schraubenkopf der M6-Innensechskant- oder M6-Innensechsrundschraube wird vollkommen innerhalb des Bohrungsabschnittes mit dem größeren Durchmesser aufgenommen. Die dem Schraubengewinde zugewandte Unterseite eines in der Stufenbohrung angeordneten Schraubenkopfes liegt auf einer Fläche, die die Grenze zwischen den beiden unterschiedliche Durchmesser aufweisenden Abschnitten der Stufenbohrung bildet, auf, sodass die Basisplatte 2 sicher auf einem optischen Tisch 12 befestigt ist.

An der Seitenkante 10 verfügt die Basisplatte 2 darüber hinaus über Steckelemente 9 die einerseits als Stecker 15 und andererseits als Aufnahme 14 ausgeführt sind. Mit Hilfe derartiger Steckelemente 9 können wenigstens zwei Basisplatten 2 positionsgenau miteinander verbunden werden. Die Steckelemente 9 sind hierbei derart angeordnet, dass die Rastermaße der über die Steckelemente 9 miteinander verbundenen Basisplatten 2 übereinstimmend ausgerichtet sind. Werden zwei derart ausgeführte Basisplatten 2 über die Steckelemente 9 miteinander zusammengesteckt und, beispielsweise auf einem optischen Tisch 12, mit Hilfe von Schrauben befestigt, können bedarfsgerecht große Grundflächen für optische Messaufbauten bereitgestellt werden. Fig. 2 zeigt in einer perspektivischen Darstellung einen Halter 4 zur Aufnahme eines optischen Elementes 5, der über eine quaderfarbige Grundstruktur verfügt. Der in Fig. 2 dargestellte Halter 4 verfügt über Befestigungselemente 7 in Form von Durchgangsbohrungen, die auf Noppenelemente 6 einer Basisplatte 2 aufsteckbar sind. Die Befestigungselemente 7 des Halters 4 sind gemäß der dargestellten Ausführungsform ebenfalls rasterförmig auf der Unterseite des Halters 4 angeordnet, wobei das Rastermaß des Halters 4 dem Rastermaß der Basisplatte 2 entspricht. Jedes der Befestigungselemente 7 auf der Unterseite des Halters 4 kann ein Noppenelement 6 zur Fixierung des Halters 4 auf der Basisplatte 2 aufnehmen. Im Bereich der Ecken des Halters sind ferner rinnenförmige Ausnehmungen 32 in der Halterwand vorgesehen. Derartige rinnenförmige Ausnehmungen 32 ermöglichen die Einbringung eines zusätzliches Fixierungselementes (hier nicht dargestellt), insbesondere einer Schraube, durch das in eingebrachtem Zustand eine zusätzliche Fixierung des Halters 4 auf den Noppenelementen 6 einer Basisplatte erreicht wird. Aufgrund der Verwendung eines vergleichsweise weichen Werkstoffes für den Halter 4 und die Basisplatte 2, kann ein zusätzliches Fixierungsmittel ohne Schwierigkeiten in die Basisplatte, insbesondere in das jeweils dem Befestigungselement 4 zugeordnete Noppelement 6, eingebracht werden.

Ferner verfügt der Halter 4 über eine Aufnahme 14, an der ein Optikelement 5, in diesem Fall bevorzugt ein kinematischer Mount mit einem Umlenkspiegel, befestigt werden kann. An den Außenseiten des Halters 4 sind Öffnungen 17 in Form von Bohrungen vorgesehen, durch die eine Strahlung, insbesondere Laserstrahlung, die zur Durchführung einer optischen Messung verwendet wird, in den Halter 4 eintreten und den Halter 4 wieder verlassen kann, wobei entlang des Strahlenweges zwischen den beiden Öffnungen 17 ein in der Aufnahme 14 gehaltenes optisches Element 5 angeordnet werden kann. Der Halter 4 ist somit derart ausgeführt, dass für eine Messung benötigte Strahlung in den Halter 4 eintreten, auf ein Optikelement 5 auftreffen und danach den Halter 4 wieder verlassen kann. Sofern eine Messung nicht durch Licht aus der Umgebung gestört werden darf, können derartige Halter 4 mit geeigneten Deckeln versehen werden und/oder derart angeordnet werden, dass aus einem Halter 4 austretendes Licht direkt in einen weiteren Halter 4 oder ein direkt auf der Basisplatte 2 angeordnetes optisches Element 5 eintritt, sodass Lichtdichtheit gewährleistet ist. Die zusätzlich vorgesehenen vier Bohrungen, die die Öffnungen 17 über den Umfang verteilt umgeben, stellen zusätzliche Schraublöcher 33 dar, die die Montage eines kinematischen Mounts ermöglichen.

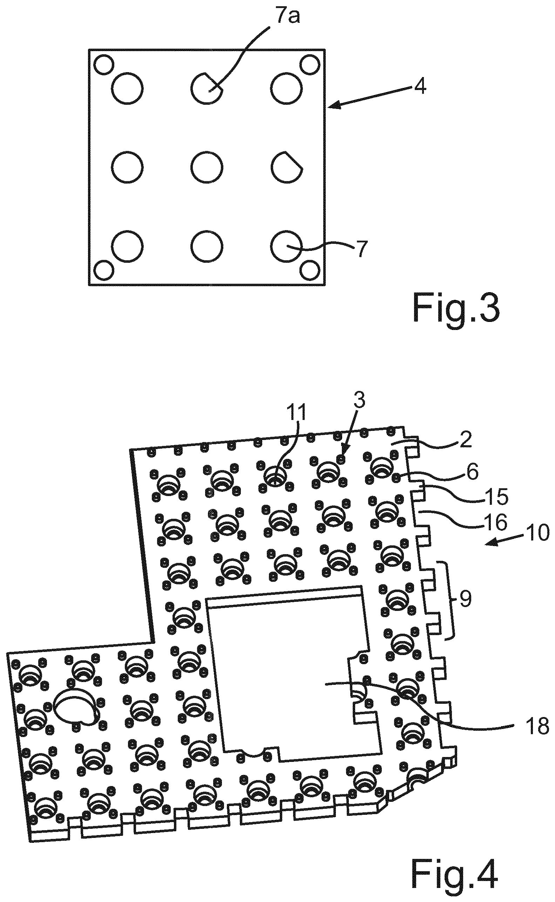

Fig. 3 zeigt eine Draufsicht auf die Unterseite eines Halters 4, der über rasterförmig angeordnete Durchgangsbohrungen als Befestigungselemente 7 verfügt. Über die in Fig. 3 gezeigten Bohrungen lässt sich der Halter 4 auf entsprechend angeordnete Noppenelemente 6 einer Basisplatte 2 aufstecken. In Diesem Zusammenhang ist es denkbar, wie in Fig. 3 gezeigt, bestimmte Befestigungselemente 7a, insbesondere Ausnehmungen, in Bezug auf ihre Form derart zu gestalten, dass sie nur auf speziell dafür vorgesehene Noppenelemente 6 mit geeigneter Gegenkontur aufsteckbar sind. Gemäß dem in Fig. 3 dargestellten Ausführungsbeispiel verfügt der Halter 4 auf seiner Unterseite über zwei Ausnehmungen als spezielle Befestigungselemente 7a, die keinen kreisrunden Querschnitt aufweisen, sondern auf einer Seite über eine Abschrägung verfügen. Ein derart ausgeführter Halter 4 kann somit nur auf einer Basisplatte 2 fixiert werden, sofern die speziellen Befestigungselemente 7a, deren Kontur von der Kreisform abweicht und deren Außendurchmesser derart klein gewählt wird, dass ein Noppenelement mit kreisförmiger Außenkontur nicht einsteckbar ist, auf entsprechend ausgeführte Noppenelemente 6, die insbesondere die gleiche Kontur aufweisen, der Basisplatte 2 aufsteckbar sind. Auf diese Weise kann sichergestellt werden, dass dieser Halter 4 nur an bestimmten Positionen und/oder in einer bestimmten Ausrichtung auf einer Basisplatte 2 fixierbar ist.

Fig. 4 zeigt eine spezielle Ausführungsform einer erfindungsgemäß ausgeführten Basisplatte 2 für ein optisches System. Wie der Fig. 4 deutlich zu entnehmen ist, kann die Form, insbesondere die Größe sowie die Außenkontur einer Basisplatte 2, an die jeweiligen Anforderungen angepasst werden. Die in Fig. 4 gezeigte Basisplatte 2 verfügt über eine vergleichsweise große Ausnehmung 18, in der beispielsweise ein großes optisches Element 5, beispielsweise ein Interferometer, angeordnet werden kann.

An den Seitenkanten 10 verfügt die Basisplatte 2 wiederum über Steckelemente 9 in Form von Steckern 15 und Aufnahmen 16, sodass diese Basisplatte 2 mit anderen in gleicher Weise ausgeführten Basisplatten 2 zusammengesteckt und beispielsweise über die ebenfalls vorgesehenen Verbindungselemente 11 auf einen optischen Tisch 12 aufgeschraubt werden kann. Die Verschraubung auf einem optischen Tisch 12 erfolgt auf vorteilhafte Weise wiederum mit Innensechskant- oder Innensechsrundschrauben, die in die entsprechend gestuften Bohrlöcher eingesteckt und in die auf einem optischen Tisch 12 vorgesehenen Innengewinde eingeschraubt werden.

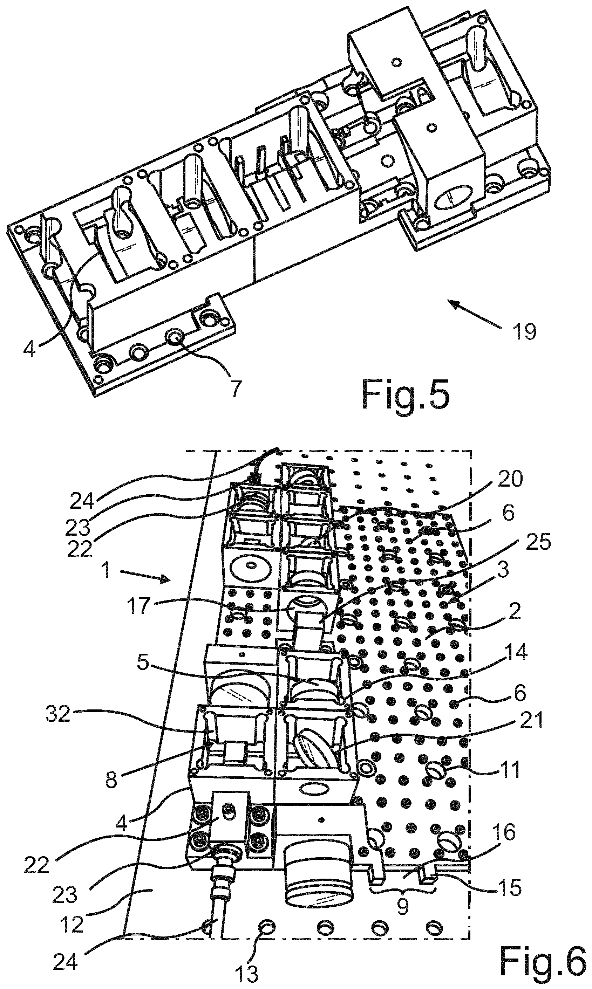

In Fig. 5 wird beispielhaft gezeigt, wie flexibel ein erfindungsgemäß ausgeführtes optisches System 1 gestaltet werden kann. Insbesondere bei Einsatz eines 3D-Druckers zur Herstellung zumindest einzelner Komponenten des erfindungsgemäßen optischen Systems 1 ist es möglich, diese an die speziellen Anforderungen, insbesondere besondere Messaufbauten, anzupassen und gleichzeitig sehr präzise auszuführen. Die in Fig. 5 gezeigte optische Komponente 19 verfügt über eine Mehrzahl von Aufnahmen 14, in die einzelne optische Elemente 5, optische Baugruppen und/oder optische Geräte, die für einen speziellen Messaufbau benötigt werden, eingefügt werden können.

Die optische Komponente 19 selbst verfügt wiederum an ihrer Unterseite über Befestigungselemente 7 in Form von Bohrungen oder Durchgangsbohrungen, über die die optische Komponente 19 auf einer Basisplatte 2 eines erfindungsgemäß ausgeführten optischen Systems 1 fixiert werden kann. Insbesondere der Einsatz eines 3D-Druckverfahrens zur Herstellung von Komponenten zum Aufbau eines optischen Systems 1 ermöglicht eine sehr flexible und gleichzeitig präzise Herstellung der einzelnen Komponenten, insbesondere der zumindest einen benötigten Basisplatte 2 und/oder der benötigten Halter 4 zur Aufnahme eines oder einer Mehrzahl von optischen, mechanischen und/oder elektromechanischen Komponenten.

Wie die obigen Ausführungen zeigen ist es wesentlich für die Erfindung, dass die Noppenelemente 6 der Basisplatte ein Raster von Befestigungspunkten 3 definieren, wodurch allerdings die Größe der auf die Basisplatte 2 aufzubringenden optischen Komponenten 5 nicht beschränkt wird. Bei lichtdichten Aufbauten ist es darüber hinaus sinnvoll, Halter 4 in quaderförmiger Ausführung einzusetzen, die mit einem Deckel versehen sind. Alternativ kann anstatt eines Deckels, ein weiterer Halter 4 und/oder eine weitere optische Komponente 5 aufgesteckt werden, um komplexe dreidimensionale Messaufbauten realisieren und/oder komplexe Komponenten mit mehreren Optiken verwenden zu können. Sollen etwa mehrere Komponenten in einem Aufbau getestet werden, ist es weiterhin denkbar, einzelne Komponenten oder Baugruppen oder aber den Gesamtaufbau in einem Schritt zu drucken.

In diesem Zusammenhang sind bei der Herstellung eines erfindungsgemäß ausgeführten optischen Systems 1 grundsätzlich zwei alternative Vorgehensweisen denkbar. Entweder wird die Basisplatte 2 mit den Haltern 4 und vorzugsweise den darin befindlichen optischen Komponenten 5 in einem Block als eine optische Komponente 19 gedruckt oder aber es werden mehrere Komponenten gedruckt und in der gewünschten Anordnung in einer oder mehreren Ebenen auf die Basisplatte 2 aufgesteckt. Die Herstellung einzelner Komponenten hat den Vorteil, dass beliebig große Aufbauten realisierbar und auch später Änderungen am Gesamtaufbau vorgenommen werden können. Das Drucken mehrerer Komponenten als eine Baugruppe bietet demgegenüber den Vorteil, dass die Positionierung der verschiedenen optischen Elemente 5 zueinander nur durch die Qualität, insbesondere die räumliche Auflösung des 3D-Druckers, bestimmt ist. Um die Positioniergenauigkeit gerade bei größeren Haltern 4 oder verwendeten Komponenten zu erhöhen, werden diese bevorzugt derart auf einer Basisplatte 2 befestigt, dass eine Fixierung durch Aufstecken auf eine Mehrzahl von Noppenelementen 6 erfolgt. Durch Einsatz eines 3D-Druckverfahrens, insbesondere des Fused-Deposition-Molding unter Einsatz von Polyacetid (PLA), Acrylnitril-Butadien-Styrol-Copolymeren (ABS) oder sonstigen geeigneten kohlenstofffaserverstärkten Kunststoffen, lassen sich optische Aufbauten vergleichsweise kostengünstig und schnell realisieren. Weiterhin lassen sich einzelne Komponenten schnell an bestimmte Erfordernisse anpassen.

Aufgrund der erfindungsgemäßen Bereitstellung eines optischen Systems 1 auf Basis eines Stecksystems können durch einfaches Umstecken von Haltern 4 und/oder sonstigen Komponenten vergleichsweise schnell geänderte Aufbauten getestet werden. Typische Komponenten, wie etwa 90°-Umlenkspiegel können immer wieder verwendet werden und bevorzugt in großer Stückzahl gedruckt werden. Ebenso kann ein erfindungsgemäß ausgeführtes optisches System 1 als Erweiterung auf typischen optischen Tischen 12 eingesetzt werden, genauso wie Stand-Alone-Lösungen realisierbar sind.

Sollte ein Messaufbau den Einsatz kinematischer Halter bzw. Mounts erfordern, können diese ebenfalls in einen 3D-Druck Vorgang integriert oder in Halter 4, die durch 3D-Drucken hergestellt wurden, eingesteckt werden.

Weitere Vorteile der Verwendung von Kunststoffmaterial für ein optisches System bestehen in der geringen thermischen Leitfähigkeit von Kunststoff im Vergleich zu den bislang verwendeten Materialien. Das ist beispielsweise von Vorteil bei Einsatz temperaturstabilisierten Komponenten, insbesondere bei Interferometern.

Neben der Integration von Optikelementen 5 können auch mechanische, elektromechanische und/oder elektronische Komponenten in ein erfindungsgemäß ausgeführtes optisches System 1 integriert werden. Wie bereits erwähnt, stehen unterschiedliche Materialien zur Verfügung, die bereits mit kostengünstigen Druckern verarbeitet werden können. Für Vakuumanwendungen und hochfeste Anwendungen bei höheren Temperaturen kann zum Beispiel Polyetheretherketon (PEEK) auf geeignete Weis eingesetzt werden. Bei Temperaturen bis 100 °C ist ferner die Verwendung von AcrylnitrilButadien-Styrol-Copolymere (ABS) besonders vorteilhaft. Eine Modifikation der erfindungsgemäß ausgeführten, bevorzugt durch 3D-Drucken hergestellten optischen Systeme 1 lässt sich ferner vergleichsweise einfach realisieren, da eine CAD-Konstruktion und die Übertragung entsprechender Daten auf einen 3D-Drucker möglich ist.

Zur Verdeutlichung, welche Aufbauten mit einem erfindungsgemäß ausgeführten optischen System 1 realisierbar sind, zeigt Fig. 6 einen optischen Tisch 12 mit daran befestigter Basisplatte 2, auf die Halter 4 mit Aufnahmen 14 für unterschiedliche Optikelemente 5 aufgesteckt sind. Die Halter 4 mit den darin aufgenommenen optischen Elementen 5 können, wie dargestellt in Würfel- oder Freiform, bereitgestellt und auf eine Basisplatte 2 aufgesteckt werden. Um eine zusätzliche Fixierung der Halter 4 auf der Basisplatte 2 sicherzustellen, sind zusätzliche Fixierungselemente 8 in Form von Schrauben vorgesehen, die zumindest teilweise in die Basisplatte 2, insbesondere in die Noppenelemente 6, eingeschraubt werden. Da die Basisplatte 2 und damit auch die Noppenelemente 6 aus einem vergleichsweise weichen Material gefertigt sind, verdrängen oder schneiden die Schrauben während des Einschraubvorgangs das Material der Basisplatte 2, sodass ein Gewindegang gebildet wird, in dem die Schrauben sicher gehalten werden. Durch Vorsehen derartiger zusätzlicher Fixierungsmittel 8 wird sichergestellt, dass sich die Halter 4 während einer Messung nicht von der Basisplatte 2 löst und in der erforderlichen Position und Ausrichtung verbleibt.

In dem in Fig. 6 dargestellten Ausführungsbeispiel sind zur Aufteilung und Führung des Lichtstrahls Polarisationsspiegel 20, 21 und weitere optische Elemente 5 vorgesehen. Insbesondere sind in den Aufbau ein Faserkoppler 22 sowie ein Anschlüsse 23 für Lichtwellenleiter 24 integriert.

Bei der in Fig. 6 gezeigten speziellen Ausführungsform sind zwei durch 3D-Druck hergestellte Basisplatten 2 vorgesehen, die mit Hilfe von Steckelementen 9 verzahnt und auf einen optischen Tisch 12 aufgeschraubt sind. Zur Überprüfung der Justage sind ferner Blenden 25 auf die Basisplatte 2 aufgesteckt worden.

In dem in Fig. 6 gezeigten optischen System 1 wird ein Lichtstrahl in zwei polarisierte Teilstrahlen aufgeteilt, die Polarisation gedreht und in verschiedenen Stärken wieder gekoppelt. Der beim Durchgang durch die schräg stehenden Optiken auftretende Strahlversatz wurde durch entsprechende Verschiebung der Optik im CAD ausgeglichen. Außer für die Faserkopplung 20 erfordert der gezeigte Aufbau keinerlei justierbare Komponenten.

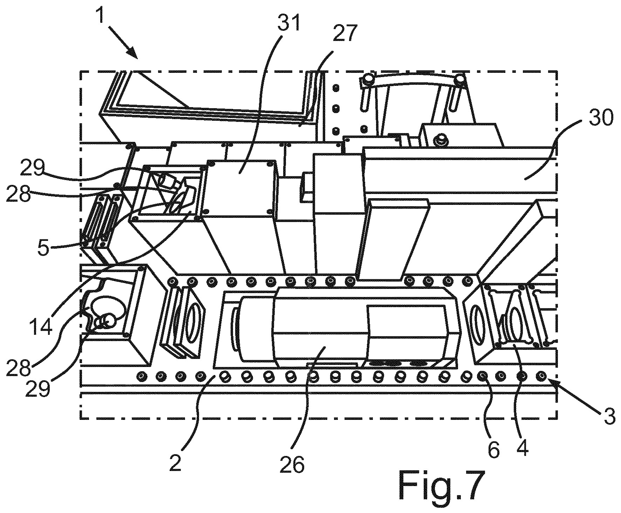

Fig. 7 zeigt ferner die Integration eines Interferometers 26 in ein erfindungsgemäß ausgeführtes optisches System 1. Auch hier wurden die einzelnen Komponenten durch 3D-Druck hergestellt. Im Hintergrund eine durch 3D-Druck hergestellte Abdeckung 27 gezeigt, mit der das Interferometer 26 abgedeckt werden kann, um so eine höhere Stabilität gegen Temperaturänderung zu erreichen. Im Weiteren ist das gesamte in Fig. 7 gezeigte optische System 1 lichtdicht ausgeführt. Da die im Hintergrund dargestellten Komponenten teilweise zwei übereinander angeordnete optische Elemente 5 aufweisen, sind diese Komponenten etwas höher. Die verwendeten kinematischen Halter 28 sind anhand der vorgesehenen Justierschrauben 29 erkennbar. Zu überbrückende Lücken zwischen einzelnen optischen Elementen 5 werden mit Hilfe von leeren und geschlossenen, ebenfalls würfelförmig ausgeführten Haltern 4 geschlossen. Das in Fig. 7 gezeigte optische System 1 dient zum Nachweis extrem geringer Lichtstärken (single photon counting). Der hierfür notwendige Detektor 30 ist in vertikaler Ausrichtung in den Aufbau integriert. Die lichtdichte Anbindung erfolgt mittels einem durch 3D-Druck hergestellten Adapter.

Der Detektor 30 besitzt eine Katode mit einem Durchmesser von 0,17 mm. Da deren Position von Detektor zu Detektor variiert, ist ein kinematischer Halter vorgesehen. Der genaue Abstand der Optik vor dem Detektor 30 wurde mit Hilfe eines separaten optischen Aufbaus ermittelt und die Linse passend zu diesem Detektor 30 gedruckt. Jeder Detektor erfordert eine individuelle Anpassung des Linsenabstandes in der Größenordnung von weniger als 1 mm. Die nicht dargestellte Linse befindet sich unter einem der Deckel 31. Auch in Fig. 7 wird somit deutlich, dass sich selbst vergleichsweise komplizierte, eine hohe Präzision erfordernde Messaufbauten vorteilhaft mit Hilfe eines erfindungsgemäß ausgeführten optischen Systems realisieren lassen.

### Bezugszeichenliste

- 1: optisches System
- 2: Basisplatte
- 3: Befestigungspunkt
- 4: Halter
- 5: optisches Element
- 6: Noppenelement
- 7: Befestigungselement
- 7a: spezielles Befestigungsmittel
- 8: zusätzliches Fixierungsmittel
- 9: Steckelement
- 10: Seitenkante
- 11: Verbindungselement
- 12: optischer Tisch
- 13: Bohrung im optischen Tisch
- 14: Aufnahme
- 15: Stecker
- 16: Steckaufnahme
- 17: Öffnung für Lichteintritt im Halter
- 18: große Ausnehmung
- 19: optische Komponente
- 20: Polarisationsspiegel
- 21: Polarisationsspiegel
- 22: Faserkoppler
- 23: Anschluss Lichtwellenleiter
- 24: Lichtwellenleiter
- 25: Blende
- 26: Interferometer
- 27: Abdeckung
- 28: kinematischer Halter
- 29: Justierschraube
- 30: Detektor
- 31: Deckel
- 32: rinnenförmige Ausnehmung
- 33: Schraubloch

## Patentansprüche

1. Optisches System (1) mit einer Basisplatte (2), die in einem Raster angeordnete Befestigungspunkte (3) aufweist, und mit wenigstens einem Halter (4) zur Aufnahme eines Optikelements (5), der an zumindest einem der Befestigungspunkte (3) fixierbar ist, wobei die Befestigungspunkte (3) in Form von Noppenelementen (6) sind, die in gleichem Abstand zueinander im Raster angeordnet sind, und der Halter (4) ein Befestigungselement (7) aufweist, das zur Fixierung des Halters (4) auf der Basisplatte (2) auf zumindest eines der Noppenelemente (6) aufsteckbar ist,
**dadurch gekennzeichnet, dass** die Basisplatte (2) wenigstens ein Verbindungselement (11) in Form einer Stufenbohrung mit zwei unterschiedlichen Bohrungsdurchmessern aufweist, über das die Befestigungsplatte (2) mit einem optischen Tisch (12), der über rasterförmig angeordnete Bohrungen (13) mit Innengewinde verfügt, verbindbar ist.

2. Optisches System nach Anspruch 1,
**dadurch gekennzeichnet, dass** am Befestigungselement (7) zumindest ein zusätzliches Fixierungsmittel (8) vorgesehen ist, das während der Fixierung des Halters (4) auf der Basisplatte (2) mit dem wenigstens einen Noppenelement (6), auf das das Befestigungselement (7) aufgesteckt ist, verbunden ist.

3. Optisches System nach Anspruch 2,
**dadurch gekennzeichnet, dass** das zusätzliche Fixierungsmittel (8) eine Bohrung im Befestigungselement (7) mit einer darin angeordneten Schraube aufweist.

4. Optisches System nach Anspruch 3,
**dadurch gekennzeichnet, dass** die Schraube als gewindeschneidende Schraube ausgeführt ist.

5. Optisches System nach einem der vorangehenden Ansprüche,
**dadurch gekennzeichnet, dass** die Basisplatte (2) und/oder der Halter (4) ein gedrucktes Material aufweist.

6. Optisches System nach einem der vorangehenden Ansprüche,
**dadurch gekennzeichnet, dass** die Basisplatte (2) und/oder der Halter (4) einen aus einem synthetischen Polymer, insbesondere aus wenigstens einem Polyactid (PLA), hergestellten Kunststoff aufweist.

7. Optisches System nach einem der vorangehenden Ansprüche,
**dadurch gekennzeichnet, dass** die Basisplatte (2) wenigstens ein Steckelement (9) aufweist, über das die Basisplatte (2) an wenigstens einer Seitenkante (10) mit wenigstens einer weiteren Basisplatte, die über rasterförmig angeordnete Befestigungspunkte verfügt, zusammensteckbar ist.

8. Optisches System nach einem der vorangehenden Ansprüche,
**dadurch gekennzeichnet, dass** die Basisplatte (2) ein Rastermaß aufweist, sodass ein Abstand zwischen Mittelpunkten wenigstens zweier benachbarter Befestigungspunkte (3) kleiner als 25 mm ist.

9. Optisches System nach einem der vorangehenden Ansprüche,
**dadurch gekennzeichnet, dass** die Basisplatte (2) ein Rastermaß aufweist, sodass 25 mm ein ganzzahlig Vielfaches eines Abstands zwischen Mittelpunkten wenigstens zweier benachbarter Befestigungspunkte (3) ist.

10. Optisches System nach einem der vorangehenden Ansprüche,
**dadurch gekennzeichnet, dass** der Halter (4) eine quader- oder würfelförmige Grundstruktur aufweist, innerhalb der das Befestigungselement (7) und die Aufnahme (14) für das optische Element (5) angeordnet sind.

11. Optisches System nach einem der vorangehenden Ansprüche,
**dadurch gekennzeichnet, dass** wenigstens ein Halter (4) einen abnehmbaren Deckel (31) aufweist, der einen Innenraum des Halters (4) vor Lichteinfall schützt.

12. Verfahren zur Herstellung eines Optischen Systems (1) nach einem der Ansprüche 1-11, bei dem eine Basisplatte (2) mit in einem Raster angeordneten Befestigungspunkten (3) bereitgestellt wird, wenigstens ein Halter (4) im Bereich eines Befestigungspunktes (3) fixiert und ein optisches Element (5) in einer Aufnahme (14) des Halters (4) befestigt wird, wobei an den Befestigungspunkten (3) der Basisplatte (2) von einer Plattenoberfläche erhabene Noppenelemente (6) ausgebildet werden und der Halter (4) durch Aufstecken eines Befestigungselements (7) des Halters (4) auf wenigstens ein Noppenelement (6), wobei eine klemmende Verbindung hergestellt wird, fixiert wird,
**dadurch gekennzeichnet, dass** die Basisplatte auf einem optischen Tisch befestigt wird, indem eine Schraube mit Außengewinde durch eine in der Basisplatte vorgesehene Stufenbohrung mit zwei unterschiedlichen Durchmessern hindurchgesteckt und in ein Innengewinde, das in einer im optischen Tisch angeordneten Bohrung angeordnet ist, eingeschraubt wird.

13. Verfahren zur Herstellung eines optischen Systems nach Anspruch 12,
**dadurch gekennzeichnet, dass** die Basisplatte (2) und/oder wenigstens einer der Halter (4) wenigstens teilweise durch 3D-Drucken hergestellt wird.

14. Verfahren zur Herstellung eines optischen System nach einem der Ansprüche 12 oder 13,
**dadurch gekennzeichnet, dass** nach Aufstecken des Befestigungselements (7) auf das wenigstens eine Noppenelement (6), als zusätzliches Fixierungsmittel (8) zumindest eine Schraube derart in eine im Befestigungselement (7) angeordnete Bohrung eingedreht wird, dass sich hierdurch in der Bohrung ein Innengewinde ausbildet und die Schraube wenigstens mit ihrem in Bewegungsrichtung vorderen Ende das Noppenelement (7) berührt.

15. Optischer Tisch mit einem daran befestigten oder befestigbaren optischen System nach wenigstens einem der Ansprüche 1 bis 11.

## Claims

1. An optical system (1) with a base plate (2) having fastening points (3) arranged in a grid and with at least one holder (4) for receiving an optical element (5), which holder can be fixed to at least one of the fastening points (3), wherein the fastening points (3) are in the form of stud elements (6), which are arranged in the grid at equal distances from one another, and the holder (4) has a fastening element (7), which can be attached onto at least one of the stud elements (6) for fixing the holder (4) to the base plate (2),
**characterized in that** the base plate (2) has at least one connecting element (11) in the form of a stepped bore with two different bore diameters, via which the fastening plate (2) can be connected to an optical table (12), said table having internally threaded bores (13) arranged in a grid pattern.

2. The optical system according to claim 1,
**characterized in that** at least one additional fixing means (8) is provided on the fastening element (7), which is connected to the at least one stud element (6), onto which the fastening element (7) is attached, while the holder (4) is fixed to the base plate (2).

3. The optical system according to claim 2,
**characterized in that** the additional fixing means (8) comprises a bore in the fastening element (7) with a screw arranged therein.

4. The optical system according to claim 3,
**characterized in that** the screw is designed as a thread-cutting screw.

5. The optical system according to any one of the preceding claims,
**characterized in that** the base plate (2) and/or the holder (4) comprises a printed material.

6. The optical system according to any one of the preceding claims,
**characterized in that** the base plate (2) and/or the holder (4) comprises a plastic manufactured from a synthetic polymer, in particular from at least one polyactide (PLA).

7. The optical system according to any one of the preceding claims,
**characterized in that** the base plate (2) comprises at least one pluggable element (9), via which the base plate (2), with at least one lateral edge (10), can be plugged together with at least one further base plate having fastening points arranged in the shape of a grid.

8. The optical system according to any one of the preceding claims,
**characterized in that** the base plate (2) has such a grid dimension that the distance between the centers of at least two adjacent fastening points (3) is less than 25 mm.

9. The optical system according to any one of the preceding claims,
**characterized in that** the base plate (2) has such a grid dimension that 25 mm is an integer multiple of a distance between the centers of at least two adjacent fastening points (3).

10. The optical system according to any one of the preceding claims,
**characterized in that** the holder (4) comprises a cuboid or cube-shaped basic structure, within which the fastening element (7) and the receptacle (14) for the optical element (5) are arranged.

11. The optical system according to any one of the preceding claims,
**characterized in that** at least one holder (4) comprises a removable cover (31) protecting an interior space of the holder (4) from light incidence.

12. A method for manufacturing an optical system (1) according to any one of claims 1-11, in which a base plate (2) with fastening points (3) arranged in a grid is provided, at least one holder (4) is fixed in the area of a fastening point (3) and an optical element (5) is fastened in a receptacle (14) of the holder (4), wherein stud elements (6) raised from a plate surface are formed at the fastening points (3) of the base plate (2) and the holder (4) is fixed by attaching a fastening element (7) of the holder (4) onto at least one stud element (6), whereby a clamping connection is established,
**characterized in that** the base plate is fastened to an optical table by inserting a screw with an external thread through a stepped bore with two different diameters provided in the base plate and screwing it into an internal thread arranged in a bore arranged in the optical table.

13. The method for manufacturing an optical system according to claim 12,
**characterized in that** the base plate (2) and/or at least one of the holders (4) is at least partially manufactured by 3D printing.

14. The method for manufacturing an optical system according to any one of claims 12 or 13,
**characterized in that**, after attaching the fastening element (7) onto the at least one stud element (6), as an additional fixing means (8), at least one screw is screwed into a bore arranged in the fastening element (7) such that hereby an internal thread is formed in the bore and the screw touches the stud element (7) at least with its front end in the direction of movement.

15. An optical table having an optical system according to at least one of claims 1 to 11 attached or attachable thereto.

## Revendications

1. Système optique (1) comprenant une plaque de base (2) qui présente des points de fixation (3) disposés selon une trame, et au moins un support (4) destiné à recevoir un élément optique (5) et qui peut être fixé sur au moins l'un desdits points de fixation (3), lesdits points de fixation (3) se présentant sous la forme d'éléments à picots (6) qui sont disposés à égale distance les uns des autres dans la trame, et ledit support (4) comporte un élément de fixation (7) qui peut être enfiché sur au moins l'un desdits éléments à picots (6) pour fixer ledit support (4) sur ladite plaque de base (2),
**caractérisé en ce que** la plaque de base (2) comporte au moins un élément de liaison (11) sous la forme d'un alésage étagé présentant deux diamètres d'alésage différents et par l'intermédiaire duquel ladite plaque de fixation (2) peut être reliée à une table optique (12) qui comporte des alésages (13) à filetage femelle disposés en trame.

2. Système optique selon la revendication 1,
**caractérisé en ce qu'**au moins un moyen de fixation supplémentaire (8) est prévu sur ledit élément de fixation (7), lequel est relié, pendant la fixation dudit support (4) sur ladite plaque de base (2), à au moins un élément à picots (6) sur lequel ledit élément de fixation (7) est enfiché.

3. Système optique selon la revendication 2,
**caractérisé en ce que** ledit moyen de fixation supplémentaire (8) comprend un alésage dans ledit élément de fixation (7) avec une vis disposée à l'intérieur.

4. Système optique selon la revendication 3,
**caractérisé en ce que** ladite vis est conçue comme une vis auto taraudeuse.

5. Système optique selon l'une des revendications précédentes,
**caractérisé en ce que** ladite plaque de base (2) et/ou ledit support (4) comportent un matériau imprimé.

6. Système optique selon l'une des revendications précédentes,
**caractérisé en ce que** ladite plaque de base (2) et/ou ledit support (4) comportent une matière plastique fabriquée à partir d'un polymère synthétique, en particulier à partir d'au moins un polyactide (PLA).

7. Système optique selon l'une des revendications précédentes,
**caractérisé en ce que** ladite plaque de base (2) comporte au moins un élément d'enfichage (9) permettant d'assembler ladite plaque de base (2) sur au moins un bord latéral (10) avec au moins une autre plaque de base qui comporte des points de fixation disposés en forme de trame.

8. Système optique selon l'une des revendications précédentes,
**caractérisé en ce que** ladite plaque de base (2) présente un pas de trame tel que la distance entre les centres d'au moins deux points de fixation (3) voisins est inférieure à 25 mm.

9. Système optique selon l'une des revendications précédentes,
**caractérisé en ce que** ladite plaque de base (2) présente un pas de trame tel que 25 mm est un multiple entier d'une distance entre les centres d'au moins deux points de fixation (3) voisins.

10. Système optique selon l'une des revendications précédentes,
**caractérisé en ce que** ledit support (4) présente une structure de base parallélépipédique ou cubique, à l'intérieur de laquelle sont disposés ledit élément de fixation (7) et le logement (14) pour ledit élément optique (5).

11. Système optique selon l'une des revendications précédentes,
**caractérisé en ce qu'**au moins un support (4) présente un couvercle amovible (31) qui protège l'espace intérieur du support (4) contre la pénétration de lumière.

12. Procédé de fabrication d'un système optique (1) selon l'une des revendications 1 à 11, dans lequel une plaque de base (2) avec des points de fixation (3) disposés en trame est fournie, au moins un support (4) est fixé dans la zone d'un point de fixation (3) et un élément optique (5) est fixé dans un logement (14) dudit support (4), des éléments à picots (6) en saillie par rapport à une surface de la plaque étant formés au niveau desdits points de fixation (3) de ladite plaque de base (2) et ledit support (4) étant fixé par emboîtement d'un élément de fixation (7) dudit support (4) sur au moins un élément à picots (6), ce qui permet d'établir une liaison par serrage,
**caractérisé en ce que** ladite plaque de base est fixée sur une table optique en enfilant une vis à filetage mâle à travers un alésage étagé présentant deux diamètres différents prévu dans ladite plaque de base ( ) et en la vissant dans un filetage femelle disposé dans un alésage prévu dans la table optique.

13. Procédé de fabrication d'un système optique selon la revendication 12,
**caractérisé en ce que** ladite plaque de base (2) et/ou au moins l'un des supports (4) sont fabriqués au moins en partie par impression 3D.

14. Procédé de fabrication d'un système optique selon l'une des revendications 12 ou 13,
**caractérisé en ce qu'**après avoir enfiché ledit élément de fixation (7) sur au moins un élément à picots (6), au moins une vis est vissée dans un trou prévu dans ledit élément de fixation (7) en tant que moyen de fixation supplémentaire (8), de telle sorte qu'un filetage femelle se forme dans le trou et que la vis touche ledit élément à picots (7) au moins avec son extrémité avant dans le sens du mouvement.

15. Table optique avec un système optique fixé ou pouvant être fixé à celle-ci selon au moins l'une des revendications 1 à 11.
